# EUROPEAN PATENT APPLICATION

(11) **EP 2 314 991 A1**
(43) Date of publication of application: **27.04.2011**
(21) Application number: 09013196.2
(22) Date of filing: 20.10.2009
(51) Int. Cl.: G01D 21/02

(54) **An electronic sensor housing**

(71) Applicant: Helvar Oy Ab, 03600 Karkkila (FI)
(72) Inventor: Holmes, Mark, Kent, ME3 7BE (GB); Marttila, Mikael, Kent, DA2 6JT (GB)
(74) Representative: LEITZINGER OY

(57) **Abstract**

The object of the invention is an electronic sensor housing comprising on the front side of the housing a movement detector 100 for detecting movements in a detection space and a light sensor 102 for measuring the amount of light and inside of the housing a control unit 103 for controlling lighting on the basis of the detected movements and the measured amount of light. The electronic sensor housing comprises on the front side of the housing a switch ring 104 at least partly surrounding the movement detector 100 for switching a convenient operation mode for lighting, the electronic sensor housing comprises different contact areas 108 for different operation modes for lighting and the switch ring 104 comprises a wiper contact part 110 for contacting from one contact area 108 to another during the switching of the convenient operation mode for lighting by using the switch ring 104 on the front side of the electronic sensor housing.

## Description

### The field of the invention

In many buildings, ships, vehicles, etc, there exists a need for more practical lighting control components for use in both stand alone applications and as part of larger systems.

### The state of the art

Sensors play a key role in modern lighting control systems and assist in providing maximum energy efficiency, safety and comfort for the end users. These sensors are most often installed in the ceilings of rooms or corridors. Typically these electronic sensors are self contained within a housing the front side of which has different sensing elements incorporated for the detection of movement in a room or corridor, a light sensor for measuring the amount if light, a visual indicator for user feedback and a receiver for use with a separate wireless remote control. Electronics associated with these sensors provides control over the local lighting on the basis of the detected movements and the measured amount of light. The control algorithms employed and their parameters change substantially based on the application and user's environment. In the state of the art this is typically done by using a switch on the back side of the electronic sensor housing that has been installed in the ceiling. The switch is located on the back side for example because of the need to keep the size of the electronic sensor housing as small as possible.

A change in operation demands access to the ceiling, removal of the electronic sensor housing from it's mounting and then adjustment of a switch setting on the back side of the electronic sensor housing to change the operation mode and reinstallation of the electronic sensor housing into the ceiling.

### Short description of the invention

The object of the invention is to accomplish an electronic sensor housing for making the switching of lighting modes easy. This is important as it allows the initial mode of operation to be set without disturbing the installation and changes to be made throughout the installation's lifetime without a need to employ skilled personnel e.g. electrician. This is achieved by an electronic sensor housing comprising on the front side of the housing a movement detector for detecting movements in a detection space and a light sensor for measuring the amount of light and inside of the housing a control unit for controlling lighting on the basis of the detected movements and the measured amount of light. The electronic sensor housing comprises on the front side of the housing a switch ring at least partly surrounding the movement detector for switching a convenient operation mode for lighting, the electronic sensor housing comprises different contact areas for different operation modes for lighting and the switch ring comprises a contact part for contacting from one contact area to another during the switching of the convenient operation mode for lighting by using the switch ring on the front side of the electronic sensor housing.

The invention is based on that the electronic sensor housing comprises on the front side of the housing a switch ring at least partly surrounding the movement detector for switching a convenient operation mode for lighting. The different contact areas in the electronics sensor housing arranged for different operation modes for lighting and a contact part for creating a connection between said contact part and a selected contact area make possible the switching of the convenient operation mode for lighting by using the switch ring on the front side of the electronic sensor housing.

The benefit of the invention is that switching between lighting modes of operation has been made safe, and easy to use, by providing access from front of unit, without a need to remove the electronic sensor housing from the installation and also without a need to increase the physical size of the electronic sensor housing.

### Short description of figures

- Figure 1: presents a front side of the electronic sensor housing according to the preferred embodiment of the present invention.
- Figure 2A: presents a perspective view of electronic sensor housing parts according to a preferred embodiment of the present invention.
- Figure 2B: presents a side view of electronic sensor housing parts according to a preferred embodiment of the present invention.
- Figure 3: presents the switch ring according to the preferred embodiment of the invention.

### Detailed description of the invention

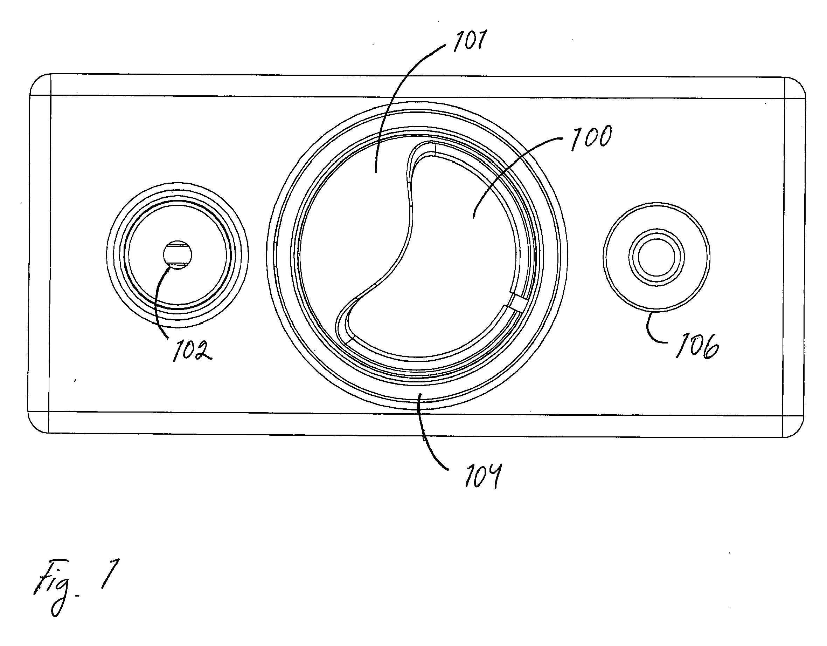

Figure 1 presents a front side of the electronic sensor housing according to the preferred embodiment of the present invention. This electronic sensor housing comprises on the front side of the housing a movement detector 100 for detecting movements in a detection space and a light sensor 102 for measuring the amount of light. According to the preferred embodiment the electronic sensor housing comprises on the front side of the housing a switch ring 104 surrounding the movement detector 100. There can also be on the front side of the housing an infrared sensor 106 for the use of a wireless remote control device. Both the movement detector 100 and the light sensor 102 can be shielded to reduce their field of view. For example for the movement detector this shielding function is performed by a shield 101.

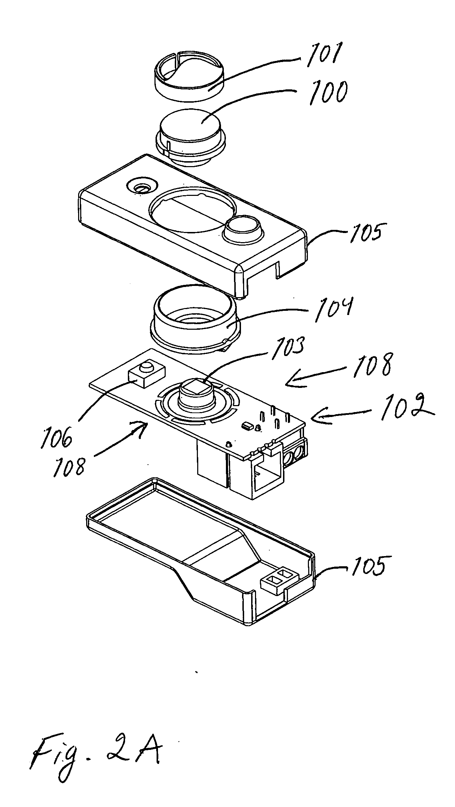

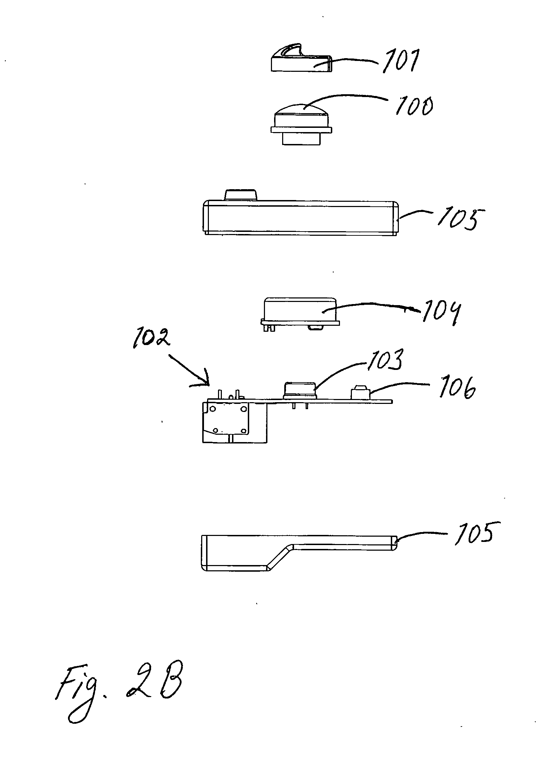

In figure 2A is presented a perspective view of electronic sensor housing parts according to a preferred embodiment of the present invention. Inside of the housing locates a control unit 103 for controlling the lighting on the basis of the detected movements and measured light intensity. Movement in the detection space is sensed by the combination of the movement detector and the control unit, which process raw signal data from the movement detector. Electronic sensor housing elements 105 are used in the construction of the electronic sensor housing. Figure 2B presents a side view of electronic sensor housing parts according to the preferred embodiment of the present invention.

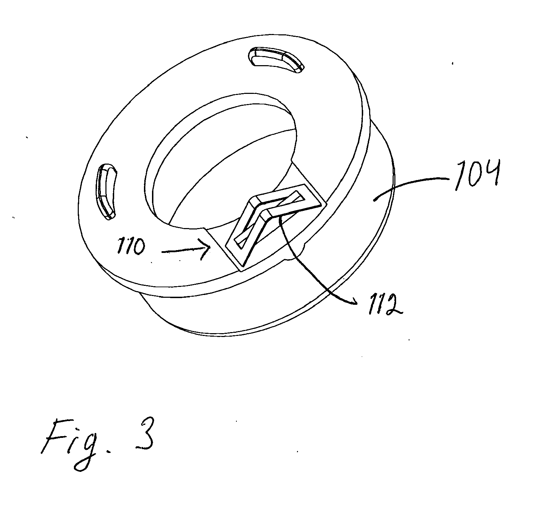

The function of the switch ring is the switching of a convenient operation mode for lighting. In the preferred embodiment of the invention the switch ring 104 combines a hand actuated multi-position switch, operated from the front of the housing, with an incorporated light pipe to provide visual feedback. Preferably the switch ring 104 is essentially protruding from the electronic sensor housing to make the hand actuation easy. The electronic sensor housing comprises of sets of contacts 108 (Fig. 2A) each associated with a lighting mode, a wiper contact part 110 (Fig. 3) to make connection between the contact part 110 and the contact sets 108 as the ring is rotated, a visual marker to show the switch ring orientation and positive tactile feedback at each switch position. The wiper contact part 110 (Fig. 3) slides from one contact area 108 (Fig 2A) to make a contact to another contact area 108 during the switching of the convenient operation mode for lighting by turning the switch ring 104 on the front side of the electronic sensor housing (Fig. 1).

The first preferable operation mode can be switched on already before the electronic sensor housing leaves the factory. Then the electronic sensor housing is installed for example on the ceiling of a room or corridor for controlling the lighting. The electronic sensor housing can also be installed inside the light source. When for example use of a room changes from class room to negotiation room, a need arises to change the operation mode. Then without removing the electronic sensor housing from the installation, the switch ring 104 is turned and a connection to a new operation mode is made. The electronic sensor housing can comprise for example a simple selection of 6 pre-set operation modes, e.g. office, class room, corridor, etc. For example, delays and sensitivities of lighting are programmed individually for different operation modes.

Figure 3 presents the switch ring according to the preferred embodiment of the invention. The wiper contact part 110 is constructed for example by utilizing a wiper contact made by chemical etching process. In this construction a plastic part 112 retains wiper and provides spring tension. Also, a tactile feedback can be utilized.

The control unit 103 is preferably a processor unit. It can comprise a set up memory for different modes of lighting and/or a programmable processor unit for programming mode settings during the use of the electronic sensor housing. The control unit can also provide feedback to the user according to the present invention by means of an integrated light pipe in the switch ring plastic part 112. Also in an embodiment according to the invention the control unit 103, or part of it, can locate also in another location than in the electronic sensor housing.

Although the invention has been presented in reference to the attached figures and specification, the invention is by no means limited to those, as the invention is subject to variations within the scope allowed for by the claims.

## Claims

1. An electronic sensor housing comprising on the front side of the housing a movement detector (100) for detecting movements in a detection space and a light sensor (102) for measuring the amount of light and inside of the housing a control unit (103) for controlling lighting on the basis of the detected movements and the measured amount of light, **characterized by**, that the electronic sensor housing comprises on the front side of the housing a switch ring (104) at least partly surrounding the movement detector (100) for switching a convenient operation mode for lighting, the electronic sensor housing comprises different contact areas (108) for different operation modes for lighting and the switch ring (104) comprises a contact part (110) for contacting from one contact area (108) to another during the switching of the convenient operation mode for lighting by using the switch ring (104) on the front side of the electronic sensor housing.

2. An arrangement in accordance with claim 1, **characterized by**, that the electronic sensor housing is installed on the ceiling of a room or corridor for controlling the lighting.

3. An arrangement in accordance with claim 1, **characterized by**, that the electronic sensor housing is installed inside to the light source for controlling the lighting.

4. An arrangement in accordance with claim 1, **characterized by**, that the contact part (110) is a wiper contact part (110) for sliding from one contact area (108) to another during the switching of the convenient operation mode for lighting by turning the switch ring (104) on the front side of the electronic sensor housing.

5. An arrangement in accordance with claim 1, **characterized by**, that as the control unit (103) is a processor unit comprising a set up memory for different modes for lighting.

6. An arrangement in accordance with claim 1, **characterized by**, that as the control unit (103) is a programmable processor unit for programming mode settings during the use of the electronic sensor housing.

7. An arrangement in accordance with claim 1, **characterized by**, that the electronic sensor housing is integrated with means for piping the light to provide user feedback.
